# EUROPEAN PATENT APPLICATION

(11) **EP 2 727 646 A1**
(43) Date of publication of application: **07.05.2014**
(21) Application number: 12191312.3
(22) Date of filing: 05.11.2012
(51) Int. Cl.: B01J 13/04, F28D 20/02

(54) **Capsule comprising phase change material, assembly, thermal buffer, and method**

(71) Applicant: Flamco B.V., 3751 LJ Bunschoten (NL)
(72) Inventor: Cnossen, Jan Henk, 8723 CP Koudum (NL); Reezigt, Herman, 8072 HJ NUNSPEET (NL); Devlin, Terence Arthur, 7312 AP Apeldoorn (NL)
(74) Representative: Grootscholten, Johannes A.M.

(57) **Abstract**

The present invention relates to a capsule, adapted to be arranged in a buffer or vessel and for selective heat storage in and/or selective heat release from the capsule. The capsule comprises a core, comprising a phase change material, and an encapsulating watertight skin arranged around the core, wherein the phase change material of the core is, in dry conditions and without the skin, at least temporarily form-retaining. Furthermore, the present invention relates to an assembly of at least two capsules and a method of forming a capsule, comprising the forming of a core of phase changing material, and arranging an encapsulating watertight skin arranged around the core, wherein forming the core comprises processing the phase change material to be at least temporarily form-retaining in dry conditions and without the skin.

## Description

The present invention relates to capsules comprising phase changing material, as well as an assembly of a plurality of such capsules, use thereof in a buffer, and a production method for manufacturing such capsules or assemblies.

The invention is based on the insight that the buffers in heating systems or heat exchange systems, like central heating systems, are usually filled with heat exchange fluids, like water. However, water and other usual heat exchange fluids have a limited heat capacity. According to the inventors of the present invention, it has been reported that phase change materials could be employed to enhance the heat capacity of a buffer, but to date no viable embodiment has been encountered.

Consequently, to meet the needs of buffer builders and users, according to the present invention a capsule is provided, which is adapted to be arranged in a buffer or vessel and for selective heat storage in and/or selective heat release from the capsule, and comprises a core, comprising a phase change material; and an encapsulating watertight skin arranged around the core.

As a consequence of these features of the present invention in relation to a capsule, it has become possible to enhance or increase heat capacity of a buffer by arranging the capsules therein, preferably though not exclusively in combination with the heat exchange fluid, which is still necessary to transfer heat from the buffer to other components of the heat exchanger system. The watertight skin prevents the phase change material from coming into contact with the heat exchange fluid, which would diminish the potential increase in heat capacity of a buffer. As a consequence of the feature that the phase change material of the core is, in dry conditions and without the skin, at least temporarily form-retaining, arranging the skin on the core is greatly facilitated to an extent where handling of the core is isolation prior to arranging the skin and processes like injection moulding dipping and 3-D printing can be employed for arranging the skin on or around the core. Form-retention can be achieved in one or more than one of many different manners, such as adding binder to, or compression of the phase change material of the core, and the like.

Within the scope of protection for the present invention as defined in the appended independent claims, many preferred but not limiting embodiments are possible, some of which have been defined in appended dependent claims.

For instance, in a preferred embodiment the core comprises salt hydrate. This is a very suitable phase change material, to be incorporated in a capsule according to the present invention, since heat capacity thereof surpasses that of water very considerably, but further also has a far superior heat capacity in terms of - for instance - enthalpy of fusion, than paraffin, sugar alcohol, regular salts, etc.

In an additional or alternative preferred embodiment of a capsule according to the present invention, the core comprises graphite. Addition of graphite to the phase change material will enhance cohesion of the phase change material and heat storage and transfer through the phase change material. Alternatively or additionally, a binder can be employed, preferably a binder exhibiting excellent heat transfer properties, and graphite or an alternative heat transfer enhancing additive may serve as a binder for the phase change material. With a binder, cohesion of the phase change material can be improved, and consequently also immediately the heat transfer properties of the phase change material in conjunction with the binder as well as the resulting heat capacity of the resulting capsule. For the binder, use can be made of one of a plurality of materials, and merely as an example here is mentioned hydrophilic polymers and Superabsorbent Polymers (SAP), such as polyacrylamid, polyacrylic acid, polyvinylalcohol and cellulose based polymers. For a general description of SAP, reference is made to http://en.wikipedia.org/wiki/Superabsorbent_polymer.

In an additional or alternative preferred embodiment of the capsule according to the present invention, the core comprises compressed phase change material. By compressing the phase change material, the core can be given a shape and form best suitable for a subsequent step of applying the watertight skin on and around the core. Naturally a binder would or at least could contribute to the stability of a core in terms of its shape, prior to the watertight skin being applied to harness or at least encapsulate the phase change material in a desired shape and form and having desired dimensions.

In an additional or alternative preferred embodiment of a capsule according to the present invention, the skin has a thickness of between 10 and 600 µm, preferably between 20 and 580 µm, more preferably between 50 and 550 µm, and most preferably between 100 and 500 µm. Such relatively thin watertight skins contribute to the desired feature of encapsulating as much phase change material as possible, while still being able to ensure outer dimensions of the resulting capsule, which under circumstances can be expected to have a maximum.

For instance, in yet another alternative or additional preferred embodiment of the capsule according to the invention, a size thereof in at least one dimension, in particular a diameter, is smaller than a buffer or vessel connection, preferably smaller than 22 mm or 15 mm. In such a preferred embodiment, it is possible to transport a buffer or tank or vessel separate from the capsules, and the capsules can be introduced into the storage space defined by the buffer, tank or vessel at its destination. As a consequence, the weight of the buffer, tank or vessel to be transported can be reduced. In particular it is noted, that such a buffer, tank or vessel will normally be connected to the heat exchange system through a connection or a connector, usually having standard dimensions, such as 15 or 22 mm. As a consequence, the capsules in this preferred embodiment of the present invention can be introduced into the interior of the buffer, tank or vessel through the connection or connector, which will then subsequently served to connect the buffer, tank or vessel to the heat exchange system to become a part thereof, after filling with heat exchange fluid. The size of the capsules should be chosen such, that with certainty the capsules can be introduced into the interior of the buffer, tank or vessel, without the watertight skin being affected by puncture or rupture or other damage in contact with the rim of a connection or connector.

In yet another alternative or additional embodiment of the capsule according to the present invention, the skin comprises a skin material from the group, comprising: PE Polyethylene, PP Polypropylene, thermoplastic elastomer and PET Polyethylene teraphthalate, HDPE High-Density Polyethylene. Depending on the type of application for arranging the watertight skin material onto and around the core and the field of specific use, such as the selected heat exchange fluid and the abrasive or maybe even acid properties thereof, a selection for any one of the mentioned materials or any alternative material will be self evident to the skilled person. In this context it is to be noted, that polypropylene is considered to be an excellent choice for 3-D printing and moulding, naturally with appropriate adaptations in relation to such manners of applying the watertight skin onto the core.

In yet another additional or alternative embodiment of the capsule according to the present invention, the skin is applied around the core through a process from a group, at least comprising: injection moulding of the skin around the core after arranging the core in a mould cavity; dipping the core in a solidifying liquid; and 3-D printing of the skin onto and around the core. It is to be noted that dipping is considered a less preferred embodiment in view of the fact that thickness control for an applied watertight skin is less accurate than with any of the other two mentioned processes. Moreover, when considering a dipping process, the skilled person would immediately recognise that the core of phase change material needs to be engaged in some manner, to perform dipping in for instance an emulsion of setting skin material, or that a wire or string must be connected to the core of phase change material and maybe extend through the core. A location around the circumference of the core where the core is engaged for dipping will exhibit a weakness in the watertight skin at the location where the core is engaged during dipping. Moreover, a wire restraining to extend around or through the core will have consequences with respect to the heat capacity of the resulting capsule. Consequently, although dipping is not excluded from the present invention, moulding and/or 3-D printing are presently expected to be preferred over a dipping, as will be further discussed herein below.

In yet another alternative or additional embodiment the capsule according to the present invention further comprises an extension protruding from the capsule. Such an extension may form a part of the core of phase change material or of the skin on and around the core, and is considered to be very useful for manoeuvring, handling and/or transporting of the resulting capsules and/or even of the intermediate products during production of the capsules.

As previously indicated, the present invention also relates to an assembly of at least two capsules according to the present invention, wherein the capsules are connected to form an elongate string or array of capsules. Such a string or array of capsules can be introduced into an interior of a buffer, tank or vessel, one capsule at a time but with the assembly intact after inserting all of the capsules in the string or array, and the assembly may even be suspended or tensioned in this interior of the buffer, tank or vessel for at least temporarily storage of heat in the capsules. Alternatively it is possible to break the connections between the capsules in a string or array to separately introduce the capsules into the interior of the buffer, tank or vessel, for instance by cutting or breaking such connections.

It is noted in this respect, that in an embodiment of a capsule exhibiting an extension and an assembly of capsules, the extension can form the connection between the capsules. Consequently, this embodiment of an assembly is elegant and simple. For instance, when producing the assembly, for instance using up moulding process or 3-D printing for applying the watertight skin onto and around the core, the extension forming a connection between the capsules can be moulded or 3-D printed at the same time as applying the watertight skin onto and around the core.

As indicated herein above, the present invention also relates to a buffer, comprising: a tank or vessel, defining an internal storage for at least a heat exchange fluid and comprising a buffer connection for connection to an external heat exchange system; and at least one capsule according to the above described aspect of the present invention or an assembly according to yet another above described aspect of the present invention. The buffer may contain discrete capsules or strings or arrays of capsules in assemblies, possibly suspended or tensioned within the interior space of the tank, vessel or buffer to allow storage of heat in the capsules, which are in use in the tank, vessel or buffer in contact with the heat exchange liquid or even submerged therein.

According to yet another aspect of the present invention, and as indicated above, the present invention also relates to a method of forming a capsule according to an above described aspect of the present invention, comprising: forming a core of phase changing material; and arranging an encapsulating watertight skin arranged around the core, wherein forming the core comprises processing the phase change material to be at least temporarily form-retaining in dry conditions and without the skin.

In a preferred embodiment of the method, the step of forming the core comprises adding graphite to the phase change material.

In yet another additional or alternative preferred embodiment of the method according to the present invention, the step of forming the core comprises compressing the phase change material. Thereby, air can be expelled from the core and a predefined shape of the core can be achieved. The presence of air inside the core could decrease the resulting heat capacity and transfer of a capsule, and a well defined intermediate shape of the core, prior to applying the watertight skin material on and around the core, has an evident beneficial influence on the subsequent step of applying the watertight skin material on and around the core. For instance, when a mould process is employed to arrange the watertight skin material on and around the core, which has accurate predefined dimensions, the thickness of the skin can be kept small so that a maximum amount of phase change material can be encapsulated in the capsule and the skipper will then, as a consequence of the small thickness thereof, pose a minimal barrier for transfer of heat their through to the interior or core of the capsule or there from.

In yet another additional or alternative embodiment of the method according to the present invention, forming the core and arranging the skin comprises dimensioning the capsule to a size thereof in at least one dimension, in particular a diameter, which is smaller than a buffer or vessel connection, preferably smaller than 22 mm or 15 mm.

In yet another additional or alternative preferred embodiment of a method according to the present invention, the step of arranging the skin comprises a process from a group, at least comprising: moulding of the skin around the core in a mould cavity after arranging the core in the mould cavity; dipping the core in a solidifying liquid; and 3-D printing of the skin onto and around the core.

In yet another additional or alternative preferred embodiment of a method according to the present invention, the method further comprises arranging an extension protruding from the capsule during the step of forming the core and/or the step of arranging the skin on and around the core.

In yet another additional or alternative preferred embodiment of a method according to the present invention, using mould process, the method comprises arranging a core of phase change material in the mould cavity part in a first mould part; closing the mould using at least one second mould part; applying a thermoplastic skin material under pressure in a first direction; and applying thermoplastic skin material under pressure in a second direction essentially opposite the first direction relative to the core in the mould cavity. As a result of this preferred embodiment of the method, all sides around the circumference of the core will be provided with a suitable thickness of skin material, even when the core comprising the phase change material could rest against an interior surface of the mould cavity and consequently hinder application of skin material at such a resting position. If thermoplastic skin material under pressure is applied simultaneously in both the first direction and the second direction, the pressure could suffice to centre the core of the capsule within the mould cavity and allow application of thermoplastic skin material evenly and having a uniform thickness around the circumference thereof.

However, as an alternative to simultaneous application of the thermoplastic skin material on and around the core and to even better ensure an even and uniform thickness of the skin material on and around the core, applying the thermoplastic skin material in the first and second directions may be performed in subsequent moulding steps.

In such an embodiment have things subsequent moulding steps at least one of the first and second mould halves is replaced for a latter of the subsequent moulding steps. A mould halve to be substituted between subsequent moulding steps can define a mould cavity, which is closely corresponding to the outer size and shape of the core during the first moulding step, and the replacing mould halve may have larger dimensions to allow for the thickness of the thermoplastic skin material and thus define an even and uniform skin thickness around the circumference of the capsule.

In an embodiment of the present invention, the method for manufacturing capsules having an extension in a process based on moulding, the method may comprise moulding the extension. Moulding the extension can be performed simultaneously with applying in a mould process of the watertight skin of the capsule. The extension can form a connection to a neighbouring capsule in a string or array of capsules, forming an assembly in another aspect of the present invention.

In an embodiment of the method according to the present invention, based on a mould process and with at least one extension on at least one of the capsules, the method may comprise manoeuvring the capsule by engaging the extension as a grip. This can be beneficial during production, for instance for handling the capsule, for instance for taking the capsule or string of capsules from a mould or mould halve after or during the production process.

Yet another additional or alternative preferred embodiment of a method according to the present invention, could be comprising arranging a form-retaining core of phase change material on a support, which optionally comprises a plurality of support elements, in a mould cavity part in a first mould part; closing the mould using at least one second mould part, optionally also comprising a support; and applying a thermoplastic skin material under pressure to the mould cavity. By arranging the core on the support, the core may be kept in alignment with walls of the moulding cavity, for example for elongate embodiments, but in any case with certainty away from walls of the mould cavity to ensure a desired thickness of the skin on the core. Consequently an improvement may be achieved with respect to all round arranging of the skin on the core in the moulding process. If a plurality of support elements are used, for example three support elements for a sphere-like core, or more support elements for more general or rectangular of square or elongate shapes of the core, the locations of contact between the core and the support elements can be relatively small. Nonetheless, any discontinuities or even holes in the skin need to be augmented or even repaired for proper use of the resulting capsules. In this respect such an embodiment of a method according to the invention may further comprise active or passive retraction of the support a time after initiating application of thermoplastic material into the mould cavity, optionally in conjunction with a base carrying the support, which may be plunger shaped, to yield under moulding pressure a space in the mould cavity for applying a skin of a desired thickness around the core. The support or support elements may be retractable after the moulding process under pressure has started. Retraction may be the result (passive) of the moulding pressure, or be an active step of engaging and retracting the support or support elements, for example using motorised engagement of the support or support element. It is especially beneficial, if the support or support elements is/are on a plunger type of base, forced by for example spring pressure towards the cavity and defining a wall thereof. As a consequence of pressure build up in the cavity, the base may be pushed against the spring force back from the core, to still define a mould cavity wall, and allow the core to be completely surrounded with thermoplastic material for the skin, without any discontinuities or even holes.

The present invention also relates to a mould having a support for the core, which may be passively or actively retractable.

Following from the above more general discussion of the present invention, herein below a detailed description of specific aspects of the present invention is set out, referring to the appended drawings of non-limiting embodiments of the present invention, wherein the same or similar aspects, components and features can be identified using the same reference numbers in different figures, and wherein:
figure 1 shows a buffer in a partly cut open view, having capsules according to the present invention inserted therein, both in the form of discrete capsules and strings or arrays of capsules;
figure 2A-2D shows steps of compressing phase change material to define a compressed core for capsules according to the present invention;
figure 3 shows preparations for the moulding process to arrange a skin on and around the compressed core of phase change material;
figure 4 shows the first step of inserting thermoplastic skin material into a mould cavity to arrange the thermoplastic skin material on and around at least a part of the predefined core of the capsule according to the present invention;
figure 5 shows the subsequent step after the step of figure 4, where a mould halve is replaced by another mould halve as depicted in figure 6;
figure 7 shows the second step of inserting thermoplastic skin material into the mould cavity; and
figure 8 shows extracting a string of capsules according to the present invention from the mould;
figure 9 shows a perspective view of the string or array of capsules forming an assembly in the sense of the present invention;
figure 10 shows a partly cutaway view of a single capsule according to the present invention, having a core and a skin, where the capsule in figure 10 is produced in isolation or isolated from a string or array of capsules like the one, shown in figure 9;
figure 11 shows a designed shape of a single capsule according to the present invention in side view;
figures 12 and 14 show alternative embodiments relative to the one of figure 9;
figure 13 shows an alternative embodiment relative to the one of figure 10 or 11;
figure 15 shows a perspective view of a mould part, defining four mould cavities partially;
figure 16 shows the sectional view in the direction of arrows XVI - XVI in figure 1;
figure 17 shows an alternative mould cavity shape and resulting capsule, relative to the embodiment of figures 15 and 16;
figure 18 shows an additional embodiment having a plunger like base with support elements thereon for accommodating a core of form-retaining phase changing material in a stable manner during injection moulding, based on passive retraction of support elements; and
figure 19 shows an alternative embodiment relative to figure 18, based on active retraction of support elements and without a plunger like base.

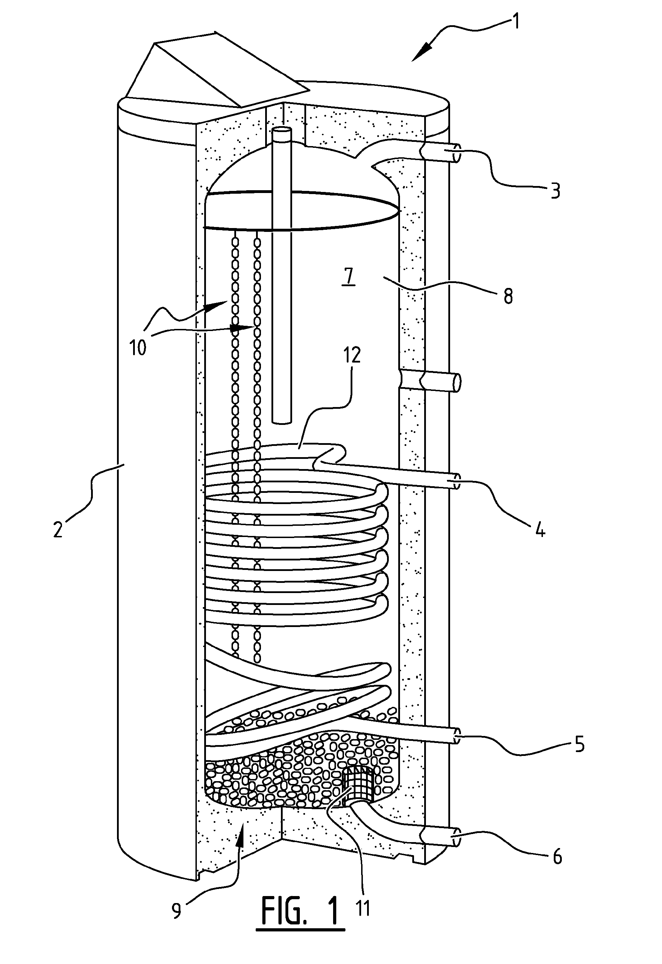

In figure 1, a buffer tank 1 according to an embodiment of the present invention is shown. The buffer tank 1 comprises enclosing walls 2, defining an interior space 7 for accommodating a heat transfer fluid 8 and discrete capsules 9 and strings or arrays of capsules 10. The interior space 7 of the buffer tank 1 may accommodate discrete capsules 9 and/or strings or arrays of capsules 10.

An input connection 3 extends through wall 2 of buffer tank 1, to allow input of heated heat exchange fluid 8, for instance water. The input connection 3 is arranged at or near the top of the buffer tank 1. At or near the bottom of the buffer tank 1 and output connection 6 is arranged. A mesh or grid 11 is provided to prevent discrete capsules 9 or strings of capsules 10 to be washed out of the interior space of the buffer tank 1.

A coiled tube or hose 12 extends between and input 4 and an output 5, through which for instance tap water can flow to heat the tap water and provide, at the output 5, heated tap water for use thereof by consumers, or as a contribution to a heating system, such as a central heating system for warming rooms of a building.

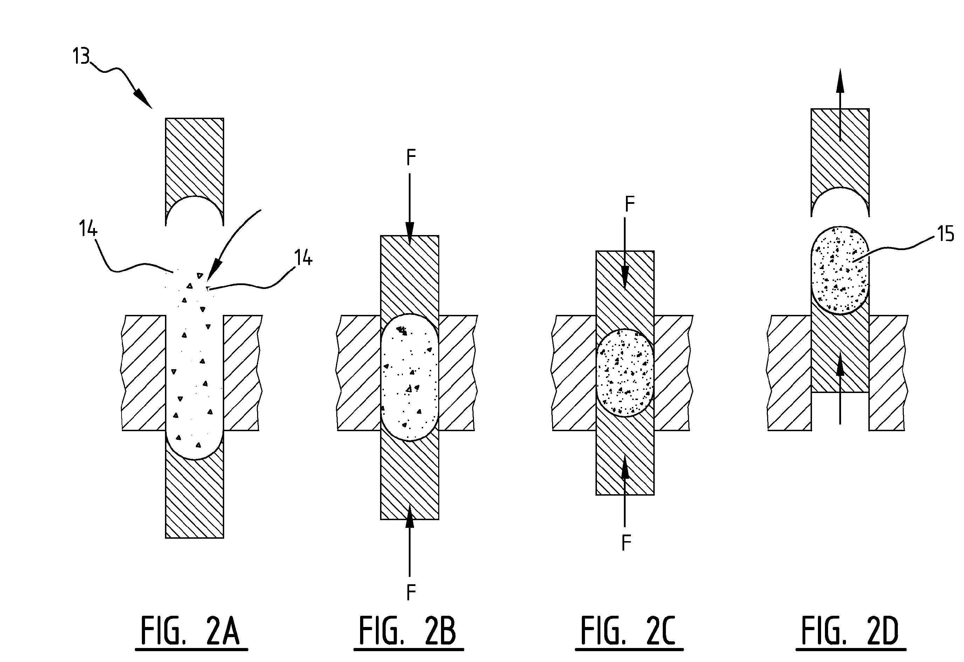

Figure 2A shows a press 13 in an opened state, where phase change material 14 is introduced into the press 13. A desired amount of graphite may be added to the phase change material 14, and/or even a binding material could be added, where it should be noted that graphite acts as a binder and also serves to enhance the heat transfer and storage capabilities of the phase change material. When a sufficient amount of phase change material 14 (and optionally also graphite and/or binding material) has been inserted into the press 13, as shown in figure 2B and figure 2C, a force F is then exerted on the phase change material 14 inside the press 13. The volume of the phase change material 14 is thereby reduced and a compressed core of phase change material for production of the capsule is obtained. By compression of the phase change material 14, a predefined shape of the core can be obtained, and moreover air is expelled from between the parts of the phase change material 14, resulting in a compact core with little remaining air therein, which error could inhibit a proper heat capacity or heat transfer capability. By expelling the error and compressing the phase change material 14, an improved core for production of capsules to be employed in the interior of the buffer tank 1 is provided.

It is noted here that the phase change material does not necessarily have to be compressed, when a binder is used with which it can be ensured that no heat insulating air is left in the phase change material.

Regardless of whether or not compression of the core is employed, a binder may comprise at least one of a plurality of materials, and merely as an example here is mentioned: graphite, hydrophilic polymers and Superabsorbent Polymers (SAP), such as polyacrylamid, polyacrylic acid, polyvinylalcohol and cellulose based polymers. For a general description of SAP, reference is made to http://en.wikipedia.org/wiki/Superabsorbent_polymer.

After compression of the phase change material 14 inside the press 13, as shown in figure 2D, the press 13 is opened to supply a pill shaped core 15 of compressed phase change material 14 for further production steps, to be described herein below.

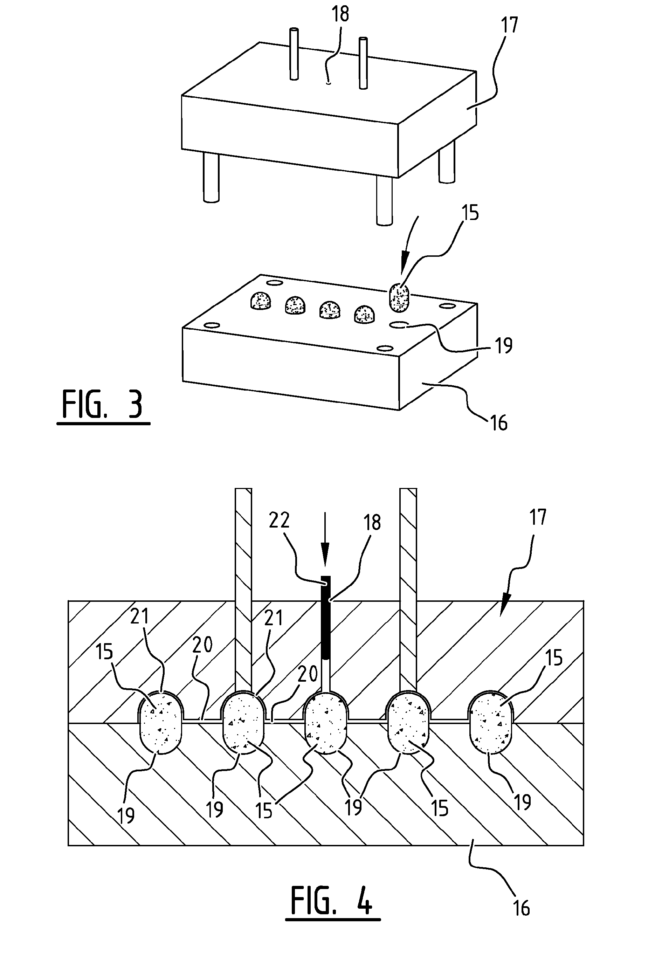

In figure 3, charging the pill shaped cores 15 into mould cavity parts 19 of a second mould halve 16 is shown. After all mould cavities 19 of the second mould halve 16 are filled with each one pill shaped core 15, a first mould halve 17 is pressed onto the second mould halve 16. The first mould halve 17 comprises slightly bigger mould cavity parts 21 then the mould cavity parts 19 of the second mould halve 16. Further, channels 20 are arranged in the first mould halve 17 between the cavity parts 21 thereof. Further, the first mould half 17 comprises an input 18 for thermoplastic material 22, to be inserted under pressure. When thermoplastic material 22 is inserted through the input 18, it flows through the channels 20 from one mould cavity part 21 to another in the direction away from the input 18. Consequently, the channels 20 are filled with thermoplastic material 22, which after the injection moulding steps remains as an extension from one pill shaped core 15 to the next, connecting the separate cores 15 and also the resulting capsules. This connection formed in the channels 20 of the first mould halve 17 is consequently formed into greatly together with the watertight skins on and around the cores 15 of phase change material 14.

Since the thermoplastic material 22 is heated in order to become fluid and allow it to be inserted through the input 18, the pill shaped cores 15 must be able to withstand some heat and moreover also the pressure generated by the input of thermoplastic material 22. The pressure, with which the pill shaped cores 15 are produced in the steps shown in figure 2A - figure 2D, impart a degree of heat resistance and more in particular also pressure resistance, sufficient to maintain the integrity as a pill shaped core 15 thereof during the subsequent step of injection moulding, as shown in figures 3-8.

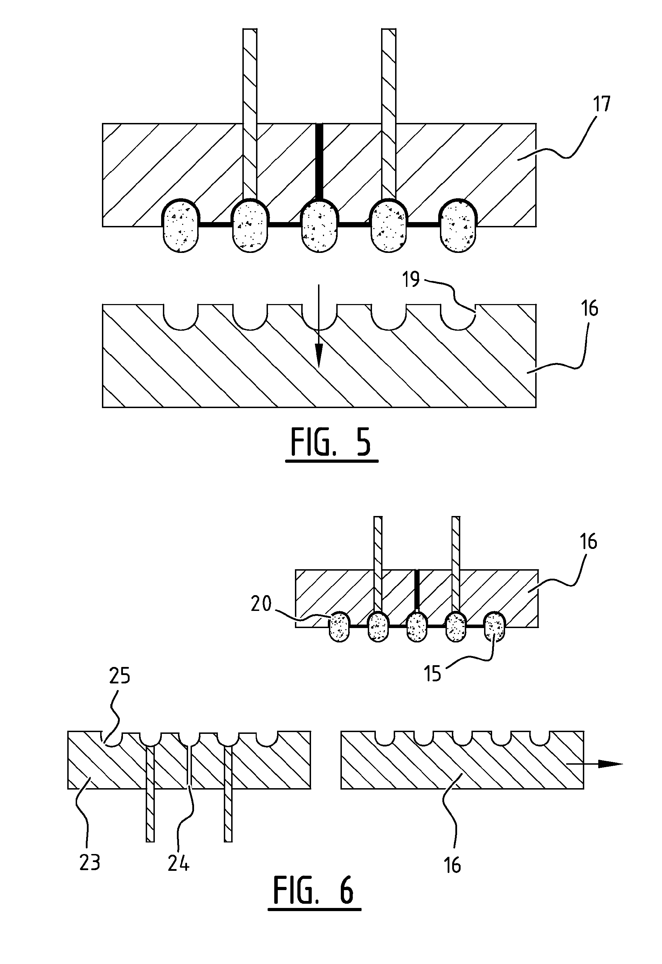

Subsequent to the step of injection moulding as shown in figure 4, the second mould halve 16 is removed, as shown in figure 5, and the second mould halve 16 is replaced by a further second mould halve 23, as shown in figure 6. The further second mould halve 23 also comprises an input 24 for thermoplastic material to form a completion of the watertight skin on and around the core 15. To achieve this, the further second mould halve 23 contains mould cavity parts 25 of the same dimensions as the mould cavity parts 21 of the first mould halve 17.

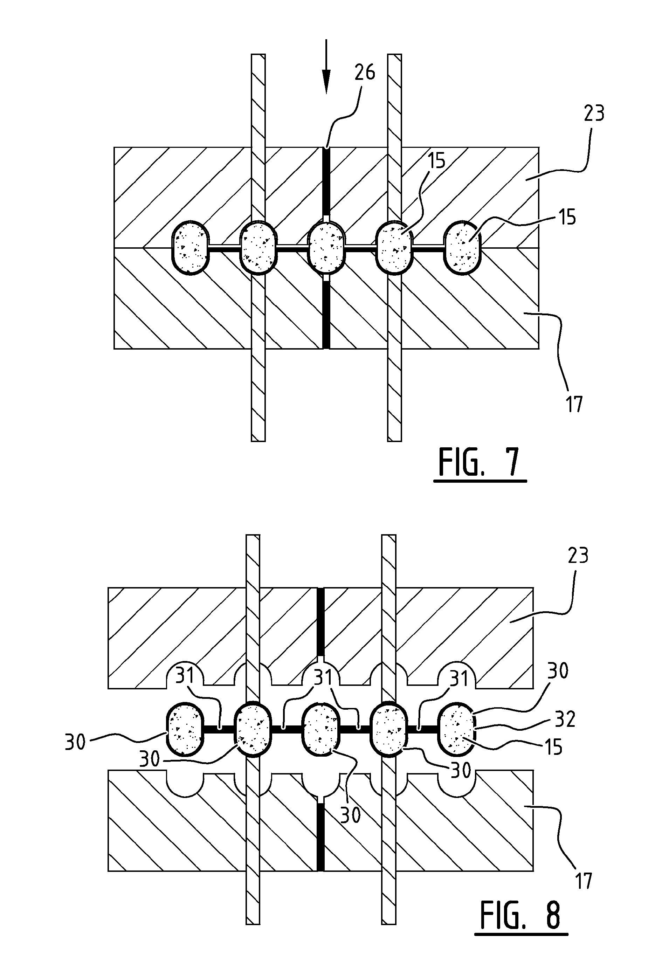

From the situation of figure 6 with the further second mould halve 23 pressed against the first mould halve 17, to arrive at the situation depicted in figure 7, the assembly of the first mould halve 17 and the further second mould halve 23 is turned upside down. Then, thermoplastic material is introduced into an input of the further second mould halve 23 to complete skins on and around the cores 15 inside the mould cavities and to also complete the connections between neighbouring pill shaped cores 15.

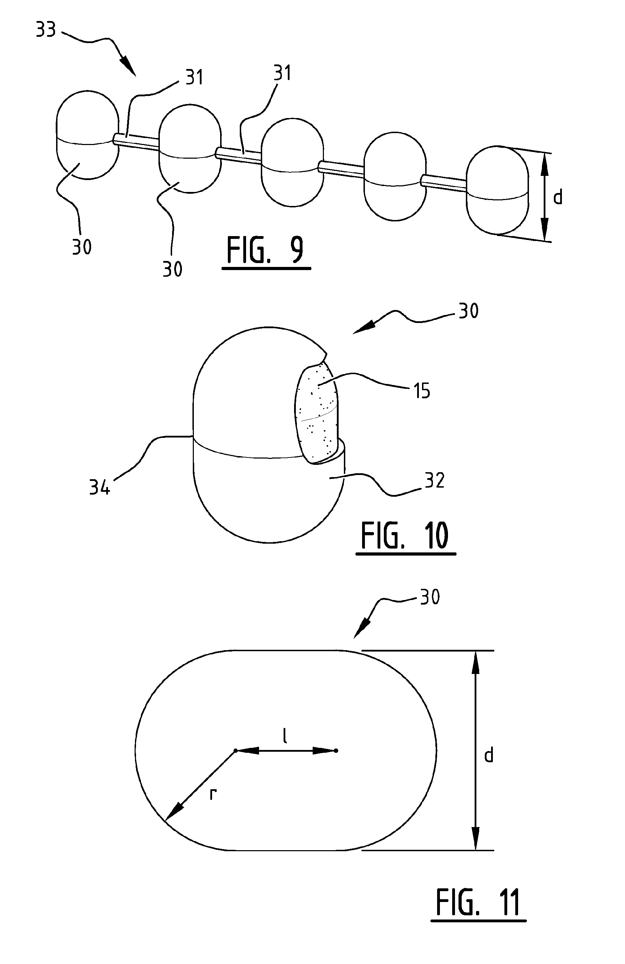

When the mould halves 17, 23 are taken apart, as shown in figure 8, a string of capsules 30, interconnected by connections 31, can be taken out of the mould. Each capsule 30 comprises the pill shaped core 15 of phase change material 14 and a watertight skin 32, that is injection moulded around the cores 15, while simultaneously creating connections 31 between neighbouring capsules 30. After release of the string or array 33 of capsules 30, as shown in perspective view in figure 9, the capsules 30 can be separated by severing the connection 31 there between, for instance by cutting or breaking. If the capsules 30 are capped in a string or array 33, as shown in figure 9, preferably the time dimension of double arrow d in figure 9 is smaller than the size of at least one access into the interior of the buffer tank 1 in figure 1. Access to the interior of the buffer tank 1 in figure 1 can be obtained through any one of the inputs 3, 4 or the outputs 5, 6 in figure 1. These input connections and output connections have, normally, standard dimensions such as 15 mm or 22 mm, and the dimension of arrow d in figure 9 is consequently preferably slightly but sufficiently less than anyone of these standard access dimensions, to allow a string or array 33 of capsules 30 to be inserted into the interior of the buffer tank 1 in figure 1 through one of the accesses 3, 4, 5, 6.

In the embodiment of figure 10 and 11, an isolated capsule 30 is shown. In figure 10 the skin 32 is partly broken away to expose the interior core 15 comprising phase changing material. The embodiment of figure 10 further also shows a separation line 34 between portions of the skin 32, where these portions are separately created in the moulding process steps shown in figure 4 and figure 7, respectively.

In figure 11 the dimension of arrow d is again depicted as a relevant dimension for allowing a capsule 30 of figure 11 to be introduced into an access into the interior of the buffer tank 1 in figure 1.

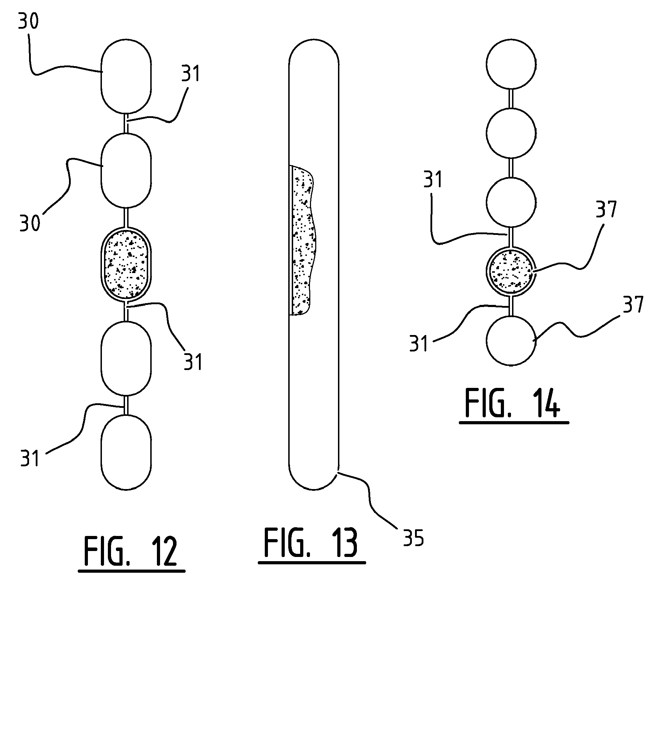

Further, figure 11 also shows a length 1 of the capsule 30 and a radius r. The radius r is half the size of the dimension of the capsule 30, to create a rounded, smooth exterior of the capsule 30. The length of the capsule 30 can be chosen freely, as is shown for instance in figure 13, where the capsule 35 is considerably longer than the capsule 30 of figure 10. As an alternative to the assembly embodiment of the string or array 33 of capsules 30, having a length dimension at a straight angle relative to the orientation of the connections 31, the length orientation of the capsules 30 could also be in line with the orientation of the connections 31, as shown in the embodiment of figure 12. Yet further as an alternative, capsules 37 can be spherical, as shown in figure 14.

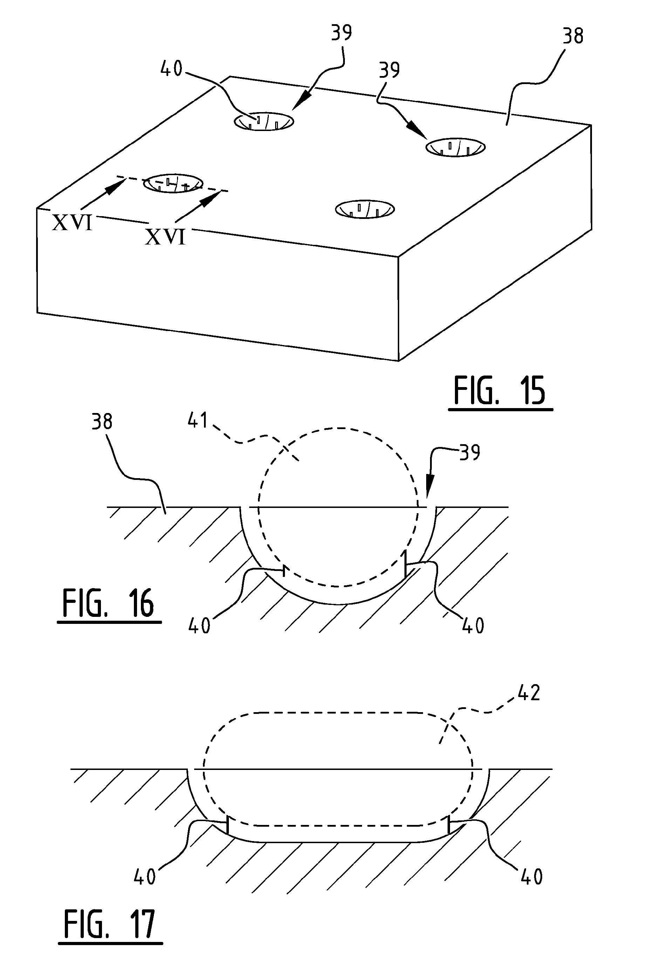

In figure 15 a mould part 38 is shown in perspective view, were the mould part 38 comprises four depressions 39, each defining a part of a mould cavity in a state, to form a complete mould cavity in combination with a further mould part (not shown in figure 15). As shown in figure 15 and in figure 16, pin-like support elements 40 are arranged in the depressions 39. Three support elements 40 are arranged in each of the depressions 39, to provide a stable accommodation for a spherical form-retaining core 41 of phase changing material. The pin like support elements 40 in the embodiment of figure 16 maintain a distance between the cavity 39 wall and the outer circumference of the spherical core 41. Likewise, in a configuration according to figure 17, four pin like support elements 14 can be employed to stably support an elongate core 42. A total of three support elements could in principle suffice to also accommodate an elongate core 42. More than four pins 40 can also be employed to support or accommodate any type or shape of core 41, 42. Consequently, injection moulding using thermoplastic material will entirely envelope the core 41. If no further measures are taken (see below) for this injection moulding process, repairs to close holes in a skin around the core 41, which may be caused by the pin-like support elements 40, will need to be performed for closing such holes. Especially if an intermediate product having a core 41 and a skin arranged their around using the moulding process as depicted in figure is 15 and 16 is taken out of a mould cavity with the skin material still in a plastic state to at least some degree, such holes can easily and simply be repaired by putting some pressure on the skin material surrounding such holes. However, this would entail a further processing step, which can be considered additional and consequently even undesirable.

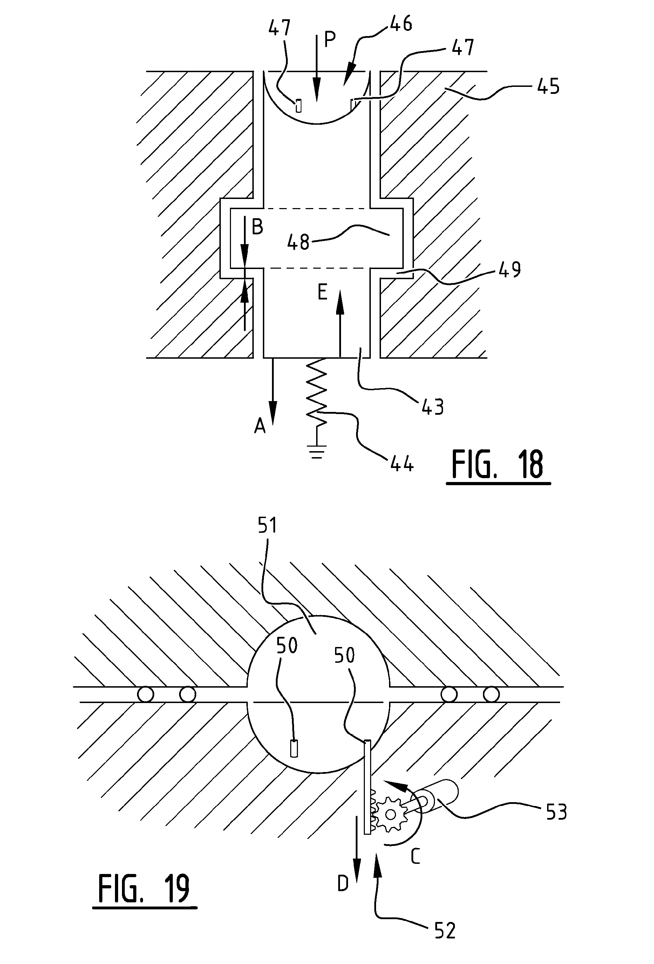

In figure 18, a mould part 45 comprises a plunger like base 43, which is pressed upwards in the mould part 45 in the direction of arrow E using a spring 44. At the top in figure 18, the plunger like base 43 comprises a depression 46, defining at least a part of the mould cavity when combined with a supplemental mould part. In the depression 46, a number of pin like support elements 47 are arranged, to support the core (not shown in figure 18) for or of a capsule during an injection moulding process. When the shown mould part 45 of figure 18 is combined with a (not shown) supplemental mould part to define a mould cavity, at least partially by the depression 46, thermoplastic material may be introduced into the mould cavity, where initially the core will be accommodated on the pin like support elements. After a short time, thermoplastic material will have surrounded the core, at which time the core will still be resting on the pin like support elements 47. As a consequence of subsequent pressure increase in the direction of generally arrow P, the plunger like base 43 will be pushed back into the mould part 45 in the direction of arrow A, contrary to those spring for its of the spring 44.

The plunger like base 43 comprises an annular ring 48, fitted in our recess 49 in the mould part 45. Enough fully extended position of the plunger like base 43, the clearance of distance B is available for movement of the plunger like base 43 in the direction of either arrow P or A. When, during the moulding process, the pressure in the mould cavity has sufficiently reason for the plunger like base 43 to recede into the body of the mould part 45, the clearance of double arrow B is available for movement of the plunger like base 43. Consequently, the clearance of double arrow B defines, restricts or limits the movement of the plunger like base 43 and core in combination with the die mention of the pin like support elements 47 defines a resulting thickness of the skin, to be arranged over and around the core of the capsule with the moulding process.

This embodiment is designated as "passive" in the sense that movement of the plunger like base 43 is initiated by pressure in the mould cavity.

In figure 19, an alternative embodiment is shown, where a first mould part and the second mould part are combined to define a mould cavity 51, where a core of phase change material can be accommodated on pin like support elements 50. Each of the pin like elements can be actively withdrawn from the cavity 51 using a transmission 52 and a drive in the form of for instance a motor 53. With the pin like support elements 50 in an extended position thereof, a core for a capsule can be accommodated thereon. Subsequently, the two mould parts can be put together to define the cavity with the core therein, and supply of thermoplastic material through an input (not shown) can be initiated. After it has been determined, that a sufficient amount of thermoplastic material is surrounding the core of the capsule, the pin like support elements 50 may be actively withdrawn in the direction of arrow D, out of contact with the core. Thermoplastic material will immediately close any space remaining after the pin like support elements 50 have been actively withdrawn, thus avoiding any need for subsequent closing of such holes or any other imperfections or discontinuities.

After the foregoing disclosure in detail of the invention, many additional and/or alternative embodiments will have become abundantly apparent to the skilled person. All such additional and/or alternative embodiments are to be considered as embodiments of the present invention in as far as such additional and/or alternative embodiments comply with the required features of at least the appended independent claims, and neither the specifically described embodiments nor the inferred alternative and/or additional embodiments are to be considered a limitation on the scope of protection as defined in the appended independent claims. For instance, the capsules can be employed in another buffer tank than the one that is depicted in figure 1. Further, are grid 11 is provided in the embodiment of figure 1 to maintain the capsules 30 inside the buffer tank, but a collection of capsules can also be arranged inside a net or the like to present the capsules from being flushed out of the buffer tank. The thickness of the skin of the capsules is preferably small to allow as much phase change material as possible to be included in the capsules, but the integrity of the watertight skins must also be ensured. For this, the skin has a thickness of between 10 and 600 µm, preferably between 20 and 580 µm, more preferably between 50 and 550 µm, and most preferably between 100 and 500 µm. Adding graphite or binder is optional. The skin preferably comprises a skin material from the group, comprising: PE Polyethylene, PP Polypropylene, thermoplastic elastomer, and PET Polyethylene teraphthalate, HDPE High-Density Polyethylene, but other materials may also be effectively employed to form a skin. In this respect it is further noted, that the thermoplastic material or other skin material surrounding the core of the capsules to be produced in accordance with the present invention, may have anyone of a selected or selectable number of colours. The chosen colour may coincide with and be coding for the phase change material in the core and/or a corresponding temperature range in use, after the capsules with the predetermined colours have been introduced into a vessel or tank, and thus in correspondence with the temperature is prevailing in use in said tank or vessel. As a consequence, prior to use of the capsules to be produced in accordance with the present invention, an appropriate type of capsule can be selected on the basis of the colour selected for the skin thereof and in correspondence with the temperature range in use thereof in the tank or vessel.

## Claims

1. A capsule, adapted to be arranged in a buffer or vessel and for selective heat storage in and/or selective heat release from the capsule, comprising:
- a core, comprising a phase change material; and
- an encapsulating watertight skin arranged around the core, wherein the phase change material of the core is, in dry conditions and without the skin, at least temporarily form-retaining.

2. The capsule of claim 1, wherein the core comprises at least one of the materials from the group, comprising: salt hydrate; binder and graphite.

3. The capsule of claim 1 or 2, wherein the core comprises compressed phase change material.

4. The capsule of any of the preceding claims, wherein a size thereof in at least one dimension, in particular a diameter, is smaller than a buffer or vessel connection, preferably smaller than 22 mm or 15 mm.

5. The capsule of any of the preceding claims, wherein the skin is applied around the core through a process from a group, at least comprising: injection moulding of the skin around the core after arranging the core in a mould cavity; dipping the core in a solidifying liquid; and 3-D printing of the skin onto and around the core.

6. The capsule of any of the preceding claims, comprising further an extension protruding from the capsule.

7. An assembly of at least two capsules according to any one of the preceding claims, wherein the capsules are connected to form an elongate string of capsules, wherein the extension of a capsule according to claim 6 may form a connection between the capsules.

8. A method of forming a capsule according to at least one of the preceding claims 1-6 or an assembly according to claim 7, comprising:
- forming a core of phase changing material; and
- arranging an encapsulating watertight skin arranged around the core,
wherein forming the core comprises processing the phase change material to be at least temporarily form-retaining in dry conditions and without the skin.

9. The method according to claim 8, wherein the step of forming the core comprises adding graphite to the phase change material.

10. The method of claim 8 or 9, wherein the step of forming the core comprises at least one step of the group comprising: adding binder to the phase change material; and compressing the phase change material.

11. The method of any of the preceding claims 8 - 10, wherein the step of arranging the skin comprises a process from a group, at least comprising: moulding of the skin around the core in a mould cavity after arranging the core in the mould cavity; dipping the core in a solidifying liquid; and 3-D printing of the skin onto and around the core.

12. The method of at least claim 11 using a mould process, comprising arranging a core of phase change material in the mould cavity part in a first mould part; closing the mould using at least one second mould part; applying a thermoplastic skin material under pressure in a first direction; and applying thermoplastic skin material under pressure in a second direction essentially opposite the first direction relative to the core in the mould cavity.

13. The method of claim 12, wherein applying the thermoplastic material in the first direction and in the second direction comprises subsequent moulding steps, and optionally at least one of the first and second mould halves is replaced for a latter of the subsequent moulding steps.

14. The method of at least claim 11 using a mould process, comprising arranging a form-retaining core of phase change material on a support, which optionally comprises a plurality of support elements, in a mould cavity part in a first mould part; closing the mould using at least one second mould part, optionally also comprising a support; and applying a thermoplastic skin material under pressure to the mould cavity.

15. The method according to claim 14, further comprising active or passive retraction of the support a time after initiating application of thermoplastic material into the mould cavity, optionally in conjunction with a base carrying the support, which may be plunger shaped, to yield under moulding pressure a space in the mould cavity for applying a skin of a desired thickness around the core.
